# EUROPÄISCHE PATENTSCHRIFT

(11) **EP 0 705 635 B1**
(45) Veröffentlichungstag und Bekanntmachung des Hinweises auf die Patenterteilung: **11.08.1999**
(21) Anmeldenummer: 95114158.9
(22) Anmeldetag: 09.09.1995
(51) Int. Cl.: B01D 46/52, B01D 27/00

(54) **Verfahren zur Herstellung von Filtern**
Process for producing filters
Procédé de production de filtres

(30) Priorität: 05.10.1994 DE 4435532
(43) Veröffentlichungstag der Anmeldung: 10.04.1996
(73) Patentinhaber: FILTERWERK MANN & HUMMEL GMBH, 71631 Ludwigsburg (DE); FRAUNHOFER-GESELLSCHAFT ZUR FÖRDERUNG DER ANGEWANDTEN FORSCHUNG E.V., 80636 München (DE)
(72) Erfinder: Geiger, Michael, D-74189 Weinsberg (DE); Montnacher, Joachim, D-66780 Rehlingen (DE); Rohrmeier, Josef, D-84082 Laberweinting (DE); Zink, Thomas, D-70569 Stuttgart (DE)
(74) Vertreter: Voth, Gerhard, Dipl.-Ing.

(56) Entgegenhaltungen:
- WO-A-86/07580
- GB-A- 2 118 884

## Beschreibung

Die Erfindung betrifft ein Verfahren zur Herstellung von Filtern nach dem Oberbegriff des Hauptanspruchs.

Aus der EP-A-0 260 267 ist ein Verfahren bekannt, bei dem Filtermaterial in Form einer kontinuierlichen Bahn im Zick-Zack zur Ausbildung von Falten als Filterelement gefaltet wird. Diese Falten werden über ein Transportmedium, z. B. ein Förderband, einer Transportschnecke zugeführt, dort der exakte Faltenabstand eingestellt und anschließend an den Seitenrändern abgedichtet.

Ein Nachteil des bekannten Verfahrens ist darin zu sehen, daß das hergestellte Filterelement nur einfache geometrische Formen aufweist. Insbesondere bei der Herstellung von Luftfiltern für die Innenraumbelüftung von Kraftfahrzeugen ist es wegen der beengten Einbauverhältnisse erforderlich, komplizierte geometrische Strukturen zu schaffen, die sich an die Umgebungsstruktur optimal anpassen.

Es ist zwar bereits bekannt, auch geometrische Formen zu schaffen, bei denen beispielsweise eine Ecke abgeschrägt ist. Dies allein reicht jedoch nicht aus, um komplizierte geometrische Strukturen des das Filter umgebenden Gehäuses optimal auszunutzen.

Der Erfindung liegt deshalb die Aufgabe zugrunde, ein Verfahren zur Herstellung von Filtern zu schaffen, bei dem eine beliebige geometrische Struktur in einfacher Weise realisierbar ist. Diese Aufgabe wird durch die Merkmale des Hauptanspruchs, gelöst.

Der wesentliche Vorteil der Erfindung besteht darin, daß schon bereits vor dem Falten des Filtermaterials diese Struktur in einem Perforiervorgang gebildet wird. Dieser Perforationsvorgang wird auf einer ebenen Papierbahn vorgenommen und ist deshalb ohne großen Aufwand durchzuführen. Nach dem Perforieren wird das Filtermaterial zick-zack-förmig gefaltet und automatisch in ein Kammsystem eingeführt. Jeder Kamm ist ein einzelner Werkstückträger und kann nach dem Durchtrennen des eingeführten Filterpapiers als solcher behandelt werden.

Anschließend wird das perforierte Filterpapier abgestoßen, dadurch erhält der Papierbalg seine Form.

In einer vorteilhaften Ausgestaltung der Erfindung kann das Perforieren mittels Laserstrahl erfolgen. Die Anwendung eines Laserstrahls zur Perforierung von Papier ist beispielsweise aus der GB 2 118 884 B bekannt. Selbstverständlich besteht die Möglichkeit, mittels eines Laserstrahls nicht nur Papier, sondern auch Vlieswerkstoffe und andere Filterwerkstoffe zu schneiden.

Mit dem erfindungsgemäßen Verfahren ist es ohne weiteres auch möglich, runde Formen bei ebenen Plattenfiltern zu verwirklichen. Dies war bisher nur durch einen sehr hohen Aufwand mit komplizierten Stanzwerkzeugen möglich.

Zum Transport des zick-zack-gefalteten Filterelements dienen beispielsweise rotierende Spindeln oder aber auch Zahnriemen, die aufgrund ihrer Zahnteilung einen definierten Faltenabstand definieren.

Zur Weiterverarbeitung des Filterelements kann gemäß einer besonders vorteilhaften Ausgestaltung der Erfindung eine kammartige Transporteinrichtung verwendet werden. In dieser wird das Filterelement mit einem Abdichtrahmen versehen oder weitere Elemente, wie z. B. Versteifungswinkel o. ä. an das Filterelement angeordnet.

Die Positionierung des Laserstrahls auf dem zu perforierenden Filtermittel erfolgt beispielsweise über eine optische Ablenkeinheit oder eine quer über das Filtermittel verlaufende Einrichtung, die die Lasereinrichtung trägt.

Diese und weitere Merkmale von bevorzugten Weiterbildungen der Erfindung gehen außer aus den Ansprüchen auch aus der Beschreibung und den Zeichnungen hervor.

Es zeigt:
- Figur 1: eine Einrichtung zum Herstellen von Filtern in der Seitenansicht,
- Figur 2: die in Figur 1 gezeigte Einrichtung in einer Draufsichtdarstellung.

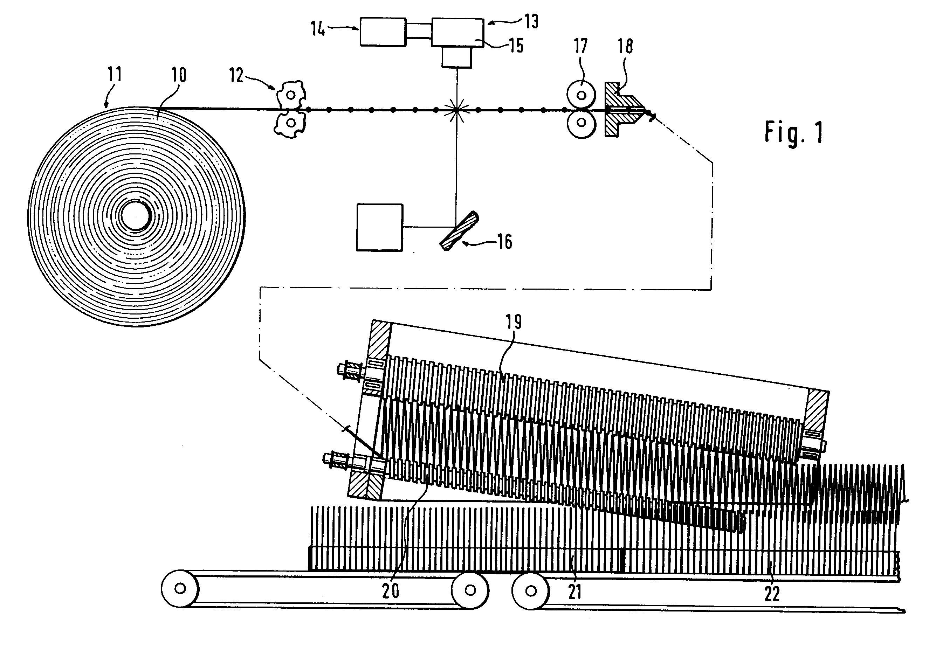

Der Einrichtung gemäß Figur 1 wird Filtermaterial 10 von einer Rolle 11 zugeführt. Dieses bahnförmige Filtermaterial gelangt zu einer Prägestation 12, in welcher die Filterbahn zum leichteren Falzen vorgeprägt wird. Anschließend gelangt das Filtermaterial zu einer Perforationseinrichtung 13, bestehend aus einer Einrichtung 14 zur Erzeugung eines Laserstrahls sowie Ablenkeinheiten 15, 16. Das perforierte Filtermaterial wird über Transportwalzen 17 zu einer Aufstelleinheit 18 geführt, die in Verbindung mit den Transportwalzen 17 eine vertikale Bewegung ausführt und das Filtermaterial in zwei oder mehrere Transportspindeln 19, 20 einführt. Unterhalb der Transportspindeln 19, 20 sind kammartige Transporteinrichtungen 21, 22 angeordnet. Diese übernehmen das zick-zack-förmig gefaltete Filtermaterial und führen es zur weiteren Bearbeitung einer hier nicht dargestellten Trenneinrichtung zu.

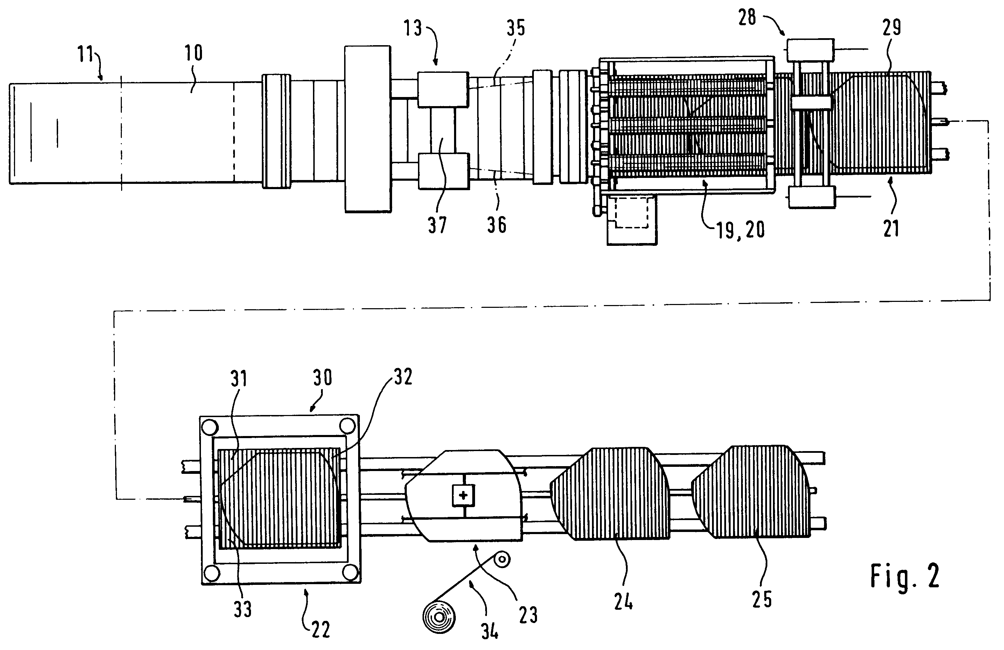

In Figur 2 ist in einer Draufsichtdarstellung die Einrichtung zum Herstellen von Filtern gezeigt. Das von der Transportrolle 11 ablaufende Filtermaterial 10 durchläuft die Perforationseinrichtung 13. Das vorgeprägte Filtermaterial wird längs der Linien 35, 36 perforiert und gelangt, wie in Figur 1 dargestellt, zwischen die Transportspindeln 19, 20. Hier wird das Filterelement an die unterhalb des Filtermaterials angeordnete Transporteinrichtungen 21, 22, 23, 24, 25 übergeben.

In einer ersten Trenneinrichtung 28 erfolgt ein quer zu der Filtermaterialbahn verlaufender Trennschnitt. Das einzelne Filterelement 29 gelangt zu einer nächsten Trenneinrichtung 30. In dieser Trenneinrichtung 30 werden die an der äußeren Kontur des Filterelements noch anhaftenden Restflächen 31, 32, 33 abgetrennt. Damit erhält das Filterelement seine gewünschte Form.

In einem nächsten Verfahrensschritt wird das Filterelement mit einem Dichtband 34 umreift. Dieses Dichtband 34 ist beispielsweise mit einem thermisch aktivierbaren Klebematerial beschichtet und sorgt für eine seitliche Abdichtung der Faltenstruktur.

Das fertig hergestellte Filterelement kann nachfolgend der Einrichtung entnommen werden.

## Patentansprüche

1. Verfahren zur Herstellung von Filterelementen, in dem ein Filtermaterial (15) in Form einer kontinuierlichen Bahn einem Prägevorgang unterzogen wird, sowie einem Perforiervorgang, und anschließend an einer Übergabestation (17, 18) zick-zack-förmig gefaltet wird und die Filterelemente (29) in einem nachfolgenden Verfahrensschritt vereinzelt werden und die aufgrund der Perforation von dem Filterelement vorgetrennten Restflächen (31, 32) entfernt werden.

2. Verfahren nach Anspruch 1, dadurch gekennzeichnet, daß das Perforieren mittels Laserstrahl (13, 14) erfolgt.

3. Verfahren nach Anspruch 2, dadurch gekennzeichnet, daß die Perforation eine Form definiert, die von einer Rechteckform abweicht.

4. Verfahren nach einem der vorhergehenden Ansprüche, dadurch gekennzeichnet, daß das zick-zack-förmig gefaltete Filterelement (29) über rotierende Spindeln (19, 20) geführt wird.

5. Verfahren nach Anspruch 4, dadurch gekennzeichnet, daß das von den Spindeln (19, 20) geführte Filterelement (29) in eine Transporteinrichtung, insbesondere in eine kammartige Transporteinrichtung (21, 22, 23, 24, 25) übergeben wird.

6. Verfahren nach einem der vorhergehenden Ansprüche, dadurch gekennzeichnet, daß der Laserstrahl mittels einer Ablenkeinheit (15, 16) auf das zu perforierende Filtermittel (10) gelenkt wird.

7. Verfahren nach einem der Ansprüche 1 bis 5, dadurch gekennzeichnet, daß die Ablenkeinheit oder die Lasereinrichtung auf einer quer über das Filtermittel verlaufenden Traverse (37) angeordnet ist.

## Claims

1. Method for producing filter elements in which a filter material (15) in the form of a continuous body is subjected to a stamping procedure and also to a perforating procedure and subsequently is folded in a zig-zag manner at a discharge point (17, 18) and the filter elements (29) are separated in a subsequent procedural step and the residual surfaces (31, 32) which have been previously separated from the filter element because of the perforation, are removed.

2. Method according to claim 1, characterised in that the perforation is achieved by means of a laser beam (13, 14).

3. Method according to claim 2, characterised in that the perforation defines a shape which deviates from a rectangular shape.

4. Method according to one of the previous claims, characterised in that the zig-zag shaped folded filter element (29) is guided over rotating spindles (19, 20).

5. Method according to claim 4, characterised in that the filter element (29) guided by the spindles (19, 20) is delivered into a transportation device, especially into a comb-like transportation device (21, 22, 23, 24, 25).

6. Method according to one of the previous claims, characterised in that the laser beam is directed onto the filter means (10) to be perforated by means of a deflection unit (15, 16).

7. Method according to one of the claims 1 to 5, characterised in that the deflection unit or the laser device is arranged on a cross beam (37) extending transversely over the filter means.

## Revendications

1. Procédé de fabrication d'éléments de filtre, dans lequel un matériau filtrant (15) sous forme d'une bande continue est soumis à une opération d'estampage ainsi qu'à une opération de perforation et enfin à un pliage en zigzag le long d'une station de transfert (17, 18), les éléments de filtre (29) étant individualisés dans une étape suivante du procédé avec élimination des petites parties résiduelles (31, 32) que la perforation a préséparées des éléments de filtre.

2. Procédé selon la revendication 1,
caractérisé en ce que
la perforation est effectuée par un rayon laser (13, 14).

3. Procédé selon la revendication 2,
caractérisé en ce que
la perforation définit une forme qui dérive d'une forme rectangulaire.

4. Procédé selon une des revendications précédentes,
caractérisé en ce que
l'élément filtrant (29) plié en zigzag se déplace en étant guidé par des broches filetées rotatives (19, 20).

5. Procédé selon la revendication 4,
caractérisé en ce que
l'élément filtrant guidé par les broches rotatives (19, 20) est transféré à un dispositif de transport en particulier un dispositif (21, 22, 23, 24) en forme de peigne.

6. Procédé selon une des revendications précédentes,
caractérisé en ce que
le rayon laser est envoyé par un ensemble déviateur (15, 16) sur l'agent filtrant à perforer.

7. Procédé selon une des revendications 1 à 5,
caractérisé en ce que
l'ensemble déviateur ou le dispositif laser est monté sur une traverse (37) située au-dessus de l'agent filtrant.
